# EUROPEAN PATENT APPLICATION

(11) **EP 4 557 827 A1**
(43) Date of publication of application: **21.05.2025**
(21) Application number: 22950756.1
(22) Date of filing: 15.07.2022
(51) Int. Cl.: H04W 36/00

(54) **PATH SWITCHING METHOD, AND APPARATUS, DEVICE AND STORAGE MEDIUM**

(71) Applicant: Beijing Xiaomi Mobile Software Co., Ltd., Beijing 100085 (CN)
(72) Inventor: XIONG, Yi, Beijing 100085 (CN)
(74) Representative: Stöckeler, Ferdinand
(86) International application number: PCT/CN2022/106122
(87) International publication number: WO 2024/011638

(57) **Abstract**

Provided in the present disclosure are a path switching method, and an apparatus, a device and a storage medium. The method comprises: receiving a request message, which is sent by a source node, wherein the request message is used for requesting a target node to perform path switching preparation; and sending a reply message to the source node. **The** embodiments of the present disclosure relate to the interaction between different nodes during a path switching process, such that the method of the present disclosure can be applied to a path switching process involving inter-gNB switching, and the path switching process involving inter-gNB switching can be successfully executed.

## Description

### TECHNICAL FIELD

The disclosure relates to the field of communication technologies, and in particular, to a path switching method, apparatus, device and storage medium.

### BACKGROUND

In a communication system, a User Equipment (UE) can be directly connected to a base station or can communicate with the base station through a relay of another UE without directly connecting to the base station. A UE that is not connected to the base station is called a remote UE, and a UE that provides relay function is called a relay UE. The communication between the remote UE and the relay UE is through sidelink (SL). The direct connection between UE and base station is called a direct link, while the connection between UE and base station through relay UE is called an indirect link.

In the related art, the connection path of UE will be switched, among which, in R18 version, path switching between base stations will be introduced. For example, switch from indirect link: remote UE< ->relay UE A<->base station X to direct link: UE<->base station Y; or, switch from direct link: UE<->base station X to indirect link: remote UE<->relay UE A<->base station Y; or, switch from the indirect link: remote UE<->relay UE A<->base station X to the indirect link: remote UE<->relay UE B<->base station Y.

However, the existing path switching process in the related art does not involve changes in base stations, so there is no signaling interaction between multiple base stations in the path switching process. Therefore, the path switching methods of the related art are not suitable for the path switching process involving switching between base stations (inter-gNB switching) mentioned above.

### SUMMARY

The present disclosure proposes a path switching method, apparatus, device, and storage medium to provide a path switching process suitable for inter-gNB switching.

In a first aspect, embodiments of the present disclosure provide a path switching method. The method is performed by a target node, and includes:
receiving a request message sent by a source node, in which the request message is configured to request the target node to prepare for path switching; and
sending a reply message to the source node.

In this disclosure, a path switching method is provided, in which the target node receives a request message sent by the source node, in which the request message is used to request the target node to prepare for path switching, and the target node also sends a reply message to the source node. From this, it can be seen that embodiments of the present disclosure involve interactions between different nodes in the path switching process, and thus the method of the present disclosure can be applied to the path switching process involving inter-gNB switching, so that the path switching process involving inter-gNB switching can be successfully executed.

In a second aspect, embodiments of the present disclosure provide a path switching method. The method is performed by a source node, and includes:
sending a request message to a target node, in which the request message is configured to request the target node to prepare for path switching; and
receiving a reply message sent by the target node.

In a third aspect, embodiments of the present disclosure provide a communication device. The device is configured in a target node, and includes:
a transceiver module, configured to receive a request message sent by a source node, in which the request message is configured to request the target node to prepare for path switching;
the transceiver module is configured to send a reply message to the source node.

In a fourth aspect, embodiments of the present disclosure provide a communication device. The device is configured in a source node, and includes:
a transceiver module, configured to send a request message to a target node, in which the request message is configured to request the target node to prepare for path switching; and
the transceiver module is configured to receive a reply message sent by the target node.

In a fifth aspect, embodiments of the present disclosure provide a communication device. The communication device includes a processor that executes the method described in the first aspect when the processor calls a computer program stored in a memory.

In a sixth aspect, embodiments of the present disclosure provide a communication device. The communication device includes a processor that executes the method described in the second aspect when the processor calls a computer program stored in a memory.

In a seventh aspect, embodiments of the present disclosure provide a communication device. The communication device includes a processor and a memory. The memory is stored with a computer program. The processor is configured to execute the computer program stored in the memory, so as to cause the communication device to implement the method described in the first aspect.

In an eighth aspect, embodiments of the present disclosure provide a communication device. The communication device includes a processor and a memory. The memory is stored with a computer program. The processor is configured to execute the computer program stored in the memory, so as to cause the communication device to implement the method described in the second aspect.

In a nineth aspect, embodiments of the present disclosure provide a communication device, including a processor and an interface circuit. The interface circuit is configured to receive code instructions and transmit the code instructions to the processor; and the processor is configured to run the code instructions, to cause the device to implement the method described in the first aspect.

In a tenth aspect, embodiments of the present disclosure provide a communication device, including a processor and an interface circuit. The interface circuit is configured to receive code instructions and transmit the code instructions to the processor; and the processor is configured to run the code instructions, to cause the device to implement the method described in the second aspect.

In an eleventh aspect, embodiments of the present disclosure provide a communication system. The system includes the communication device as described in the third aspect and the communication device as described in the fourth aspect, or the system includes the communication device as described in the fifth aspect and the communication device as described in the sixth aspect, or the system includes the communication device as described in the seventh aspect and the communication device as described in the eighth aspect, or the system includes the communication device as described in the nineth aspect and the communication device as described in the tenth aspect.

In a twelfth aspect, embodiments of the present disclosure provide a computer readable storage medium, configured to store instructions used by the above network device and/or terminal device, which when executed, cause the network device to implement the method described in the first aspect, and/or cause the terminal device to implement the method described in the second aspect.

In a thirteenth aspect, the present disclosure further provides a computer program product including a computer program that, when run on a computer, causes the computer to perform the method described in the first aspect or the second aspect.

In a fourteenth aspect, the present disclosure provides a chip system. The chip system includes at least one processor and an interface for supporting the network device to implement the functions involved in the first aspect, and/or supporting the terminal device to implement the functions involved in the second aspect, such as determining or processing at least one of the data and information involved in the above method. In one possible design, the chip system further includes a memory for storing necessary computer programs and data for the source node. This chip system can be composed of chips or include chips and other discrete components.

In a fifteenth aspect, the present disclosure provides a computer program which, when run a computer, causes the computer to implement the method described in the first aspect or the second aspect.

### BRIEF DESCRIPTION OF THE DRAWINGS

The above and/or additional aspects and advantages of the present disclosure will become apparent and easily understood from the following description of the embodiments in conjunction with the accompanying drawings, wherein:
Fig. 1 is a schematic diagram of an architecture of a communication system provided in an embodiment of the present disclosure.
Fig. 2 is a schematic flowchart of a path switching method provided in another embodiment of the present disclosure;
Fig. 3 is a schematic flowchart of a path switching method provided in yet another embodiment of the present disclosure;
Fig. 4 is a schematic flowchart of a path switching method provided in still yet another embodiment of the present disclosure;
Fig. 5a-5b is a schematic flowchart of a path switching method provided in another embodiment of the present disclosure;
Fig. 6 is a schematic flowchart of a path switching method provided in yet another embodiment of the present disclosure;
Fig. 7 is a schematic flowchart of a path switching method provided in still yet another embodiment of the present disclosure;
Fig. 8 is a schematic flowchart of a path switching method provided in still yet another embodiment of the present disclosure;
Fig. 9 is a schematic flowchart of a path switching method provided in still yet another embodiment of the present disclosure;
Fig. 10 is a block diagram of a communication device provided in an embodiment of the present disclosure;
Fig. 11 is a block diagram of a communication device provided in another embodiment of the present disclosure;
Fig. 12 is a block diagram of a communication device provided in an embodiment of the present disclosure;
Fig. 13 is a schematic diagram of a chip provided in an embodiment of the present disclosure.

### DETAILED DESCRIPTION

The exemplary embodiments will be described in detail here, with examples shown in the accompanying drawings. When referring to the accompanying drawings, unless otherwise indicated, the same numbers in different drawings represent the same or similar elements. The implementations described in the following exemplary embodiments do not represent all implementations consistent with the embodiments of the present disclosure. On the contrary, they are only examples of devices and methods consistent with some aspects of the embodiments of the present disclosure as described in the accompanying claims.

The terms used in embodiments of the present disclosure are only for the purpose of describing specific embodiments and are not intended to limit the embodiments of the present disclosure. The singular forms of "a" and "the" used in this disclosure and the accompanying claims are also intended to include the majority form, unless the context clearly indicates otherwise. It should also be understood that the term "and/or" used in this article refers to and includes any or all possible combinations of one or more associated listed items.

It should be understood that although various information may be described using terms such as first, second, third, etc. in this disclosure, such information should not be limited to these terms. These terms are only used to distinguish information for the same type from each other. For example, without departing from the scope of this disclosure, the first information can also be referred to as the second information, and similarly, the second information can also be referred to as the first information. Depending on the context, the word "if" used here can be interpreted as "when...... " or "in case that... ... " or "in response to determining ... ... ".

The following provides a detailed description of embodiments of the present disclosure, examples of which are shown in the accompanying drawings, where the same or similar reference numerals throughout represent the same or similar elements. The embodiments described below with reference to the accompanying drawings are exemplary and intended to explain the present disclosure, and should not be construed as limiting the present disclosure.

For ease of understanding, first introduce the terms involved in this disclosure.

### 1. Sidelink (SL)

Link for direct communication between terminal devices.

### 2. Remote UE

A UE that communicates with the base station through other UEs without directly communicating with the base station.

### 3. Potential remote UE

A UE that may switch from the current direct link to the indirect link. That is, although it is currently directly connected to the base station, it can be indirectly connected to the base station through other UEs in the future.

### 4. Relay UE

A UE used to implement relay communication between other UEs and base stations.

It should be noted that in this disclosure, any method provided by any embodiment can be executed separately, any implementation in the embodiments can also be executed separately, or combined with other embodiments, or combined with possible implementations in other embodiments, or combined with any technical solution in the related art.

In order to better understand the path switching method disclosed in the embodiments of the present disclosure, the following first describes the communication system applicable to the embodiments of the present disclosure.

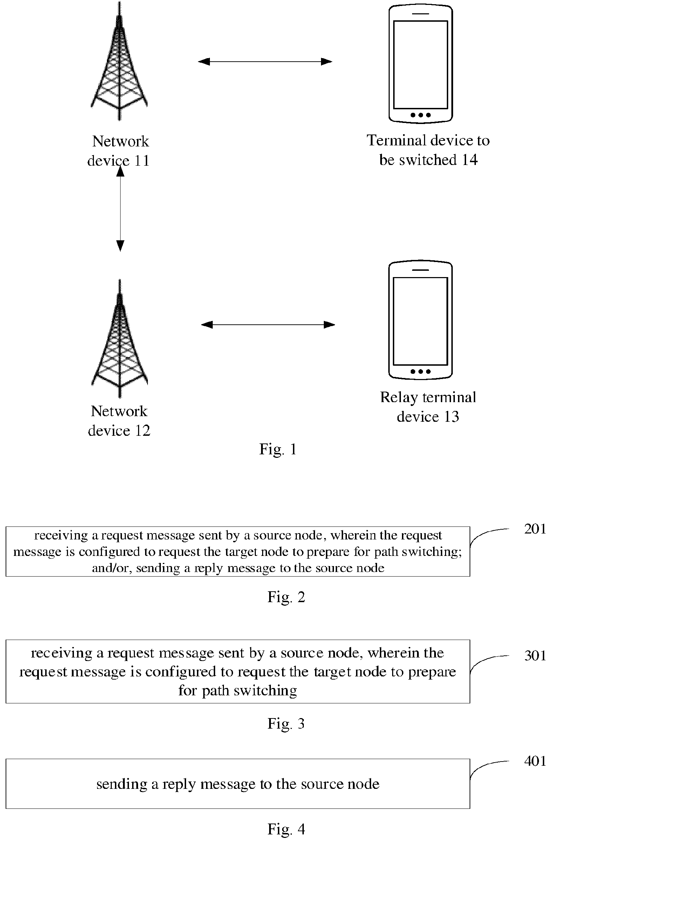

Please refer to Fig. 1, which is a schematic diagram of an architecture of a communication system provided in an embodiment of the present disclosure. The communication system may include, but is not limited to, a network device, a remote terminal device and a relay terminal device. The number and form of devices shown in Fig. 1 are for example only and do not constitute a limitation on the embodiments of the present disclosure. In practical applications, it may include two or more network devices, and two or more terminal devices. The system shown in Fig. 1 includes one network device 11, one network device 12, one relay terminal device 13 and one terminal device to be switched 14 as an example.

It should be noted that the technical solution disclosed in embodiments of the present disclosure can be applied to various communication systems, for example, Long Term Evolution (LTE) systems, 5th generation (5G) mobile communication systems, 5G new radio (NR) systems, or other future new mobile communication systems.

The network device 11 and the network device 12 in embodiments of the present disclosure are entities on the network side used for transmitting or receiving signals. For example, the network device 11 may be an evolved NodeB (eNB), a transmission reception point (TRP), a next generation NodeB (gNB) in an NR system, a base station in other future mobile communication systems, or an access node in a wireless fidelity (WiFi) system. The specific technology and device form adopted by the network device is not limited in embodiments of the present disclosure. The network device provided in embodiments of the present disclosure may be composed of a central unit (CU) and distributed units (DUs), where the CU may also be referred to as a control unit. The CU-DU structure can be used to separate the protocol layers of the network device, such as the base station, with some protocol layer functions centrally controlled by the CU and the remaining or all protocol layer functions distributed in the DUs, which are centrally controlled by the CU.

The terminal device 13 and the terminal device to be switched 14 in embodiments of the present disclosure are entities on the user side used for receiving or transmitting signals, such as a mobile phone. The terminal device may also be referred to as terminal, user equipment (UE), mobile station (MS), mobile terminal (MT), etc. The terminal device may be communication enabled car, smart car, mobile phone, wearable device, tablet, computer with wireless transmission and reception capabilities, virtual reality (VR) terminal device, augmented reality (AR) terminal device, wireless terminal device in industrial control, wireless terminal device in self-driving, wireless terminal device in remote medical surgery, wireless terminal device in smart grid, wireless terminal device in transportation safety, wireless terminal device in smart city and wireless terminal device in smart home, etc. The specific technology and device form adopted by the terminal device is not limited in embodiments of the present disclosure.

It can be understood that the communication system described in embodiments of the present disclosure is for a clearer explanation of the technical solution provided in embodiments of the present disclosure, and does not constitute a limitation on the technical solution provided in embodiments of the present disclosure. Those skilled in the art know that with the evolution of system architecture and the emergence of new business scenarios, the technical solution provided in embodiments of the present disclosure is also applicable to similar technical problems.

The following provides a detailed description of the path switching method, apparatus, device, and storage medium provided in embodiments of the present disclosure with reference to the accompanying drawings.

Fig. 2 is a schematic flowchart of a path switching method provided in an embodiment of the present disclosure. The method is performed by a target node, and as shown in Fig. 2, the path switching method may include the following steps.

Step 201, a request message sent by a source node is received, in which the request message is used to request the target node to prepare for path switching; and/or, a reply message is sent to the source node.

In an embodiment of the present disclosure, both the source node and the target node may be base stations. In some possible implementations, the target node receives a request message sent by the source node in order to establish a connection with the UE connected to the source node when switching. It should be understood that the source node and UE can be directly connected or indirectly connected through one or more relay UEs.

In an embodiment of the present disclosure, the request message may be for example a switching request message (HANDOVER REQUEST). The request message may include one or more of the followings:
first indication information, configured to indicate a connection mode with the target node requested by the source node for the UE to be switched;
an identification of the UE to be switched;
identification(s) of one or more target relay UEs; or
identification(s) of one or more target cells.

The identification of the target relay UE and the identification of the target cell mentioned above can be directly recommended by the source node to the target node, or recommended by the source node to the target node based on the recommendation of the UE to be switched.

The request message requesting the target node to prepare for path switching can be understood as: requesting the target node to allocate resources for path switching to the UE to be switched.

The connection mode requested by the UE to be switched mentioned above may be a direct connection, and/or an indirect connection. The direct connection refers to the UE directly connecting with the base station; the indirect connection refers to the UE connecting to the base station through a relay UE. The UE to be switched can be a UE directly connected to the source node, or a UE indirectly connected to the source node.

In an embodiment of the present disclosure, the first indication information may indicate that the source node requests a direct connection, an indirect connection, or any connection mode from the target node. The specific indication method may include any of the followings.

The first type: the first indication information indicates that the source node requests a direct connection, an indirect connection, or any connection mode from the target node by taking different values.

The above request message indicating that the source node requests any connection mode from the target node can be understood as: the request message indicates that the source node request s a connection with the target node for the UE to be switched, but does not request the specific connection mode between the UE to be switched and the target node, that is, there is no requirement for specific connection mode between the UE to be switched and the target node. If the request message indicates that the source node requests a direct connection and/or an indirect connection from the target node, it means that the request message not only indicates that the source node requests a connection with the target node for the UE to be switched, but also indicates the specific connection mode.

Furthermore, the first indication information may include an N-bit bit code, where N is a positive integer. Therefore, the first indication information can indicate that the source node requests a direct connection, an indirect connection, or any connection mode from the target node by taking different values.

For example, the first indication information may include one bit. When the first indication information is a first value, it indicates that the source node requests a direct connection from the target node. When the first indication information is a second value, it indicates that the source node requests an indirect connection from the target node.

As an example, the first indication information may include two bits. When the first indication information is the first value, it indicates that the source node requests a direct connection from the target node. When the first indication information is the second value, it indicates that the source node requests an indirect connection from the target node. When the first indication information is the third value, it indicates that the source node requests any connection mode from the target node (i.e., may be a direct connection or an indirect connection).

As an example, the first indication information may contain one bit. When the first indication information is the first value, it indicates that the source node requests a direct connection from the target node. Otherwise, it indicates that the source node requests an indirect connection or any connection mode from the target node.

As an example, the first indication information may contain one bit. When the first indication information is the first value, it indicates that the source node requests an indirect connection from the target node. Otherwise, it indicates that the source node requests a direct connection or any connection mode from the target node.

The second type: the first indication information may include one or more of the followings:
first sub indication information, configured to indicate that the source node requests a direct connection from the target node;
second sub indication information, configured to indicate that the source node requests an indirect connection from the target node;
third sub indication information, configured to indicate that the source node requests any connection mode from the target node (i.e., may be a direct connection or may be an indirect connection).

When the request message includes the first sub indication information, it indicates that the request message is used to request a direct connection from the target node. When the request message includes the second sub indication information, it indicates that the request message is used to request an indirect connection from the target node. When the request message includes the third sub indication information, it indicates that the request message is used to request any connection mode from the target node. When the request message includes the first and second sub indication information, it indicates that the request message is used to request direct and indirect connections from the target node. When the request message includes the first and third sub indication information, it indicates that the request message is used to request a direct connection or any connection mode from the target node. When the request message includes the second and third sub indication information, it indicates that the request message is used to request an indirect connection and any connection mode from the target node.

Further, in an embodiment of the present disclosure, the above request message may not include the first indication information. When the first indication information is not included in the request message, it is defaulted that the source node requests the first specific connection mode from the target node. The first specific connection mode may be pre agreed upon and may include one or more of the following:
a direct connection;
an indirect connection; or
any connection mode.

In another embodiment of the present disclosure, when the request message does not include the first indication information, the connection mode requested by the request message can also be determined based on whether the request message includes the identification of the target relay UE and/or the identification of the target cell. Specifically, in response to the request message not including the first indication information, if the request message includes the identification of the target relay UE, it implicitly indicates that the source node requests an indirect connection or any connection mode from the target node. In response to the request message not including the first indication information, if the request message includes the identification of the target cell but not the identification of the relay UE, it implicitly indicates that the source node requests a direct connection or any connection mode from the target node.

Furthermore, the identification of the UE to be switched mentioned above may include one or more of the following:
the identification corresponding to the UE to be switched on the source node;
the identification corresponding to the UE to be switched on the target node.

The target relay UE mentioned above can be a U2N relay UE or a U2U relay UE. The identification of the target relay UE mentioned above may include one or more of the following:
the identification corresponding to the target relay UE on the source node;
the identification corresponding to the target relay UE on the target node.

The identification of the UE to be switched and the identification of the target relay UE may be, for example, the UE XnAP ID.

In an embodiment of the present disclosure, for the target cell mentioned above, if the request message includes the identification of the target relay UE and the identification of the target cell, the target cell may include one or more of the following:
a serving cell of the target relay UE (i.e. the cell serving the target relay UE in a connected state);
a camping cell of the target relay UE (i.e. the camping cell of the target relay UE in a non connected state);
a possible serving cell of the target relay UE (i.e. a possible serving cell of the target relay UE in connected state); or
a possible camping cell of the target relay UE (i.e. a possible camping cell of the target relay UE in a non connected state).

It should be noted that when the target relay UE corresponds to one or more target cells, the target cell can be one or more of the above-mentioned cells. When the target relay UE corresponds to one target cell, the target cell should be the serving cell of the target relay UE or the camping cell of the target relay UE.

In another embodiment of the present disclosure, if the request message does not include the identification of the target relay UE, but only includes the identification of the target cell, then the target cell can be any one or more of the cells corresponding to the target node.

In an embodiment of the present disclosure, if the request message requests a direct connection, the target cell means that the UE to be switched can switch to this target cell to directly connect with the target node. If the request message requests an indirect connection, the target cell means that the UE to be switched can switch to this target cell and indirectly connect with the target node through the relay UE.

Furthermore, in an embodiment of the present disclosure, the identification of the target cell may be one or more of the Global ID, E-UTRA CGI (cell global ID), and the NR CGI.

It should be noted that when the request message includes both the identification of the target cell and the identification of the target relay UE, since a target relay UE can correspond to one or more target cells, and a target cell can also correspond to one or more target relay UEs, based on this, in an embodiment of the present disclosure, the identification of the target relay UE and the identification(s) of one or more target cells corresponding to the target relay UE can be included in the same Information Element (IE). Alternatively, the identification of the target cell and the identification(s) of one or more target relay UEs corresponding to the target cell can be included in the same IE. Thus, the target node can determine the target cell and one or more target relay UEs corresponding to the target cell by parsing the same IE, or can determine the target relay UE and one or more target cells corresponding to the target relay UE by parsing the same IE.

The above content is an introduction to the "receiving a request message sent by the source node" in step 202. The following provides a detailed introduction to "sending a reply message to the source node" in step 202.

In an embodiment of the present disclosure, the reply message may include one or more of an acknowledgement message and a failure message. This acknowledgement message can be used to indicate the success of the source node request (i.e. the target node has successfully prepared for path switching), and this failure message can be used to indicate the failure of the source node request (i.e. the target node has not successfully prepared for path switching).

In an embodiment of the present disclosure, the method of sending the reply message to the source node may include the following steps.

Step 1: configuring resources for path switching based on the request message.

Specifically, in an embodiment of the present disclosure, the target node may first determine the connection modes requested by the source node based on the request message, and determine the connection mode allowed by the target node from the connection modes requested by the source node (i.e., the way in which the UE to be switched ultimately accesses this target node).

Specifically, in an embodiment disclosed herein, the method for determining the connection modes requested by the source node may include:
in response to the request message including the first indication information, determining the connection modes requested by the source node based on the first indication information, that is, determining one or more connection modes indicated by the first indication information as the connection modes requested by the source node.

**In** an embodiment of the present disclosure, the method of determining the connection modes requested by the source node may include:
in response to the request message not including the first indication information, determining the connection modes requested by the source node based on whether the request message includes the identification of the target relay UE and/or the identification of the target cell.

If the request message includes the identification of the target relay UE, it indicates that the connection mode requested by the source node is an indirect connection or any connection mode; if the request message includes the identification of the target cell but does not include the identification of the relay UE, it indicates that the connection mode requested by the source node is a direct connection or any connection mode. In addition, it should be noted that in an embodiment of the present disclosure, there is a special case: if a certain target cell corresponds to only one target relay UE, when the source node requests an indirect connection or any connection mode, the request message sent by the source node to the target node may only contain the identification of the target cell, without including the identification of the unique target relay UE corresponding to the target cell. After receiving the request message, the target node can uniquely determine the corresponding target relay UE based on the target cell included in the request message, and then resources for path switching can be configured for the target relay UE and/or the target cell subsequently. Based on this, in an embodiment of the present disclosure, if the request message includes the identification of the target cell but does not include the identification of the relay UE, and the target cell corresponds to one target relay UE, it indicates that the connection mode requested by the source node is an indirect connection or any connection mode.

After the target node determines the connection modes requested by the source node, it can choose any connection mode from the connection modes requested by the source node based on implementation, as the connection mode allowed by the target node. Alternatively, the target node can choose any connection mode different from the connection modes requested by the source node as the connection mode allowed by the target node, rather than take the connection mode requested by the source node as the connection mode allowed by the target node. The connection mode allowed by the target node can be a direct connection or an indirect connection.

Further, in an embodiment of the present disclosure, in response to the determined connection mode allowed by the targe node being an indirect connection, the target node performs one or more of the following operations:
configuring resources for path switching for one or more target relay UEs included in the request message;
based on one or more target cells corresponding to the target relay UE with successful resource configuration, determining the target cell with successful resource configuration (such as determining one or more target cells corresponding to the target relay UE with successful resource configuration as the target cells with successful resource configuration);
configuring resources for path switching for one or more target cells included in the request message;
based on one or more target relay UEs corresponding to the target cell with successful resource configuration, determining the target relay UE with successful resource configuration (such as determining one or more target relay UEs corresponding to the target cell with successful resource configuration as the target relay UEs with successful resource configuration);
autonomously determining one or more target relay UEs and configuring resources for path switching for the autonomously determined target relay UEs;
autonomously determining one or more target cells and configuring resources for path switching for the autonomously determined target cells.

In another embodiment of the present disclosure, in response to the connection mode allowed by the target node being a direct connection, the target node performs one or more of the following operations:
configuring resources for path switching for one or more target cells included in the request message;
autonomously determining one or more target cells and configuring resources for path switching for the autonomously determined target cells.

Step 2: sending the reply message to the source node based on resource allocation situation.

In an embodiment of the present disclosure, in response to failure of resource allocation, a failure message is sent to the source node; in response to success of resource allocation, an acknowledgement message is sent to the source node.

In an embodiment of the present disclosure, the acknowledgement message may be a switching request acknowledgement (HANDOVER REQUEST ACKNOWLEDGE) message. The acknowledgement message may include one or more of the followings:
second indication information, configured to indicate the connection mode allowed by the target node;
identification of UE to be switched;
identification of the target relay UE with successful resource allocation;
identification of the target cell with successful resource allocation.

In an embodiment of the present disclosure, the method for indicating the connection mode allowed by the target node through the second indication information may specifically include any of the following.

Method 1: the second indication information indicates whether the target node allows a direct connection or an indirect connection by taking different values.

For example, the first indication information can be a one-bit value. When the first indication information is the fourth value, it indicates that the target node allows a direct connection. When the first indication information is the fifth value, it indicates that the target node allows an indirect connection.

Method 2: the second indication information may include any of the following:
fourth sub indication information, configured to indicate that the target node allows a direct connection for the UE to be switched;
fifth sub indication information, configured to indicate that the target node allows an indirect connection for the UE to be switched.

When the acknowledgement message includes the fourth sub indication information, it indicates that the target node allows a direct connection for the UE to be switched. When the acknowledgement message includes the fifth sub indication information, it indicates that the target node allows an indirect connection for the UE to be switched.

Furthermore, in an embodiment of the present disclosure, the acknowledgement message mentioned above may not include the second indication information. When the request message does not include the second indication information, the default connection mode allowed by the target node is the second specific connection mode. The second specific connection mode can be pre-agreed upon and can include a direct connection or an indirect connection.

In another embodiment of the present disclosure, when the request message does not include the first indication information, the connection mode allowed by the target node can also be determined based on whether the acknowledgement message includes the identification of the target relay UE and/or the identification of the target cell. Specifically, in response to the absence of the second indication information in the acknowledgement message, if the acknowledgement message includes the identification of the target relay UE, it implicitly indicates that the connection mode allowed by the target node is an indirect connection. In response to the absence of the second indication information in the acknowledgement message, if the acknowledgement message includes the identification of the target cell but does not include the identification of the target relay UE, then it implicitly indicates that the connection mode allowed by the target node is a direct connection. In response to the acknowledgement message not including the second indication information, if the acknowledgement message includes the identification of the target cell but does not include the identification of the target relay UE, and the target cell corresponds to one target relay UE, then it implicitly indicates that the connection mode allowed by the target node is an indirect connection.

Furthermore, the identification of the UE to be switched mentioned above may include one or more of the following:
identification corresponding to the UE to be switched on the source node;
identification corresponding to the UE to be switched on the target node.

The target relay UE mentioned above can be a U2N relay UE or a U2U relay UE. The identification of the target relay UE mentioned above may include one or more of the following:
identification corresponding to the target relay UE on the source node;
identification corresponding to the target relay UE on the target node.

The identification of the UE to be switched and the identification of the target relay UE can be the UE XnAP ID.

In an embodiment of the present disclosure, for the target cell mentioned above, if the acknowledgement message includes the identification of the target relay UE and the identification of the target cell, then the target cell can include one or more of the following:
the serving cell of the target relay UE (i.e. the cell serving the target relay UE in a connected state);
the camping cell of the target relay UE (i.e. the camping cell of the target relay UE in a non connected state);
a possible serving cell of the target relay UE (i.e. a possible serving cell of the target relay UE in the connected state); or
a possible camping cell of the target relay UE (i.e. a possible camping cell of the target relay UE in the non connected state).

It should be noted that when a target relay UE corresponds to one or more target cells, the target cell can be one or more of the above-mentioned cells. When a target relay UE corresponds to one target cell, the target cell should be the serving cell of the target relay UE or the camping cell of the target relay UE.

In another embodiment of the present disclosure, if the acknowledgement message does not include the identification of the target relay UE, but only includes the identification of the target cell, then the target cell may be one or more of the cells corresponding to the target node.

In an embodiment of the present disclosure, if the acknowledgement message indicates that the target node allows a direct connection, then the target cell means that the UE to be switched can switch to this target cell to directly connect with the target node. If the acknowledgement message indicates that the target node allows an indirect connection, then the target cell means that the UE to be switched can switch to indirectly connect with the target node through a relay UE.

In addition, in an embodiment of the present disclosure, the identification of the target cell mentioned above may be one or more of Global ID, E-UTRA CGI (Cell Global ID), or NR CGI.

It should be noted that when the acknowledgement message includes both the identification of the target cell and the identification of the target relay UE, since one target relay UE can correspond to one or more target cells, and one target cell can also correspond to one or more target relay UEs, based on this, in an embodiment of the present disclosure, the identification of the target relay UE and the identification(s) of one or more target cells corresponding to the target relay UE can be included in the same Information Element (IE). Alternatively, the identification of the target cell and the identification(s) of one or more target relay UEs corresponding to the target cell can be included in the same IE. Thus, the source node can determine the target cell with successful resource configuration and one or more target relay UEs corresponding to the target cell by parsing the same IE. Alternatively, the source node can determine the target relay UE with successful resource configuration and one or more target cells corresponding to the target relay UE by parsing the same IE.

Further, in an embodiment of the present disclosure, the above failure message may be a HANDOVER PREPARATION FAILURE message, in which the failure message may include one or more of the following:
third indication information, configured to indicate the connection mode for the failed switching of the target node; in which, the connection mode for the failed switching of the target node can be any one or more of the connection modes requested by the source node;
identification of UE to be switched;
identification of the target relay UE with failed resource configuration;
identification of the target cell with failed resource configuration.

It should be noted that the method for the target node to send the failure message to the source node can also be: in response to the target node receiving the request message sent by the source node, if the target node directly determines to reject the path switching preparation, it can directly send the failure message to the source node. At this time, the failure message can only include third indication information to indicate that the target node rejects the path switching requested by the source node.

**In** summary, in the path switching method provided in embodiments of the present disclosure, the target node will receive a request message sent by the source node, in which the request message is used to request the target node to prepare for path switching, and/or the target node will also send a reply message to the source node. From this, it can be seen that embodiments of the present disclosure involve interactions between different nodes in the path switching process, and thus the method of the present disclosure can be applied to the path switching process involving inter-gNB switching, so that the path switching process involving inter-gNB switching can be successfully executed.

Fig. 3 is a schematic flowchart of a path switching method provided in an embodiment of the present disclosure. **The** method is performed by a target node, and as shown in Fig. 3, the path switching method may include the following steps.

Step 301, a request message sent by a source node is received, in which the request message is configured to request the target node to prepare for path switching.

With respect to a detailed introduction to this step, reference can be made to the description in the above embodiments, which will not be elaborated in this embodiment of the present disclosure.

In summary, in the path switching method provided in this embodiment of the present disclosure, the target node will receive a request message sent by the source node, where the request message is used to request the target node to prepare for path switching. From this, it can be seen that embodiments of the present disclosure involve interactions between different nodes in the path switching process, and thus the disclosed method can be applied to the path switching process involving inter-gNB switching, so that the path switching process involving inter-gNB switching can be successfully executed.

Fig. 4 is a schematic flowchart of a path switching method provided in an embodiment of the present disclosure. The method is performed by a target node, and as shown in Fig. 4, the path switching method may include the following steps.

Step 401, a reply message is sent to a source node.

Specifically, in the path switching method provided in this embodiment of the present disclosure, in response to corresponding preparations or configurations made by the target node for the switching operation of the UE to be switched, the target node can send a reply message to the source node to inform the source node of the result.

For example, the target node can send an acknowledgement message to the source node, where the acknowledgement message indicates that the source node's request was successful;
or, the target node can send a failure message to the source node, where the failure message indicates that the source node's request has failed.

With respect to a detailed introduction to this step, reference can be made to the description in the above embodiments, which will not be repeated here.

From this, it can be seen that the embodiments of the present disclosure involve interactions between different nodes in the path switching process, and thus the method disclosed can be applied to path switching processes involving inter-gNB switching, so that the path switching process involving inter-gNB switching can be successfully executed.

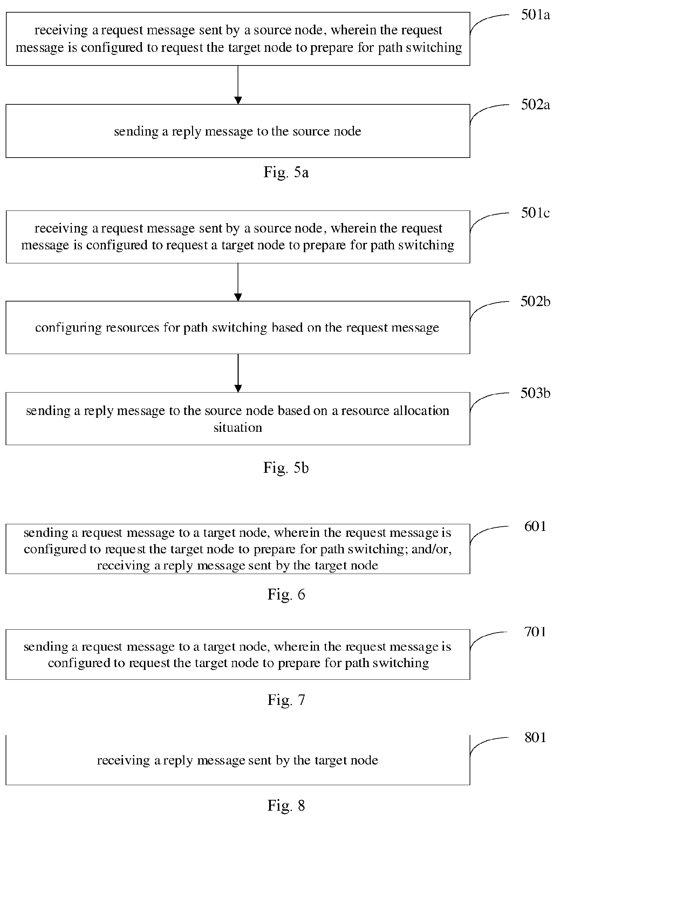

Fig. 5a is a schematic flowchart of a path switching method provided in an embodiment of the present disclosure. The method is performed by a target node, and as shown in Fig. 5a, the path switching method may include the following steps.

Step 501a, a request message sent by a source node is received, in which the request message is configured to request the target node to prepare for path switching.

Step 502a, a reply message is sent to the source node.

With respect to a detailed introduction to steps 501a-502a, reference can be made to the description in the above embodiments, which will not be repeated here.

In summary, in the path switching method provided in this embodiment of the present disclosure, the target node will receive a request message sent by the source node, where the request message is used to request the target node to prepare for path switching, and then the target node will send a reply message to the source node. From this, it can be seen that embodiments of the present disclosure involve interactions between different nodes in the path switching process, and thus the disclosed method can be applied to the path switching process involving inter-gNB switching, so that the path switching process involving inter-gNB switching can be successfully executed.

Fig. 5b is a schematic flowchart of a path switching method provided in an embodiment of the present disclosure. The method is performed by a target node, and as shown in Fig. 5b, the path switching method may include the following steps.

Step 501b, a request message sent by a source node is received, in which the request message is configured to request the target node to prepare for path switching.

Step 502b, resources for path switching are configured based on the request message.

Step 503b, a reply message is sent to the source node based on resource allocation situation.

With respect to a detailed introduction to steps 501b-503b, reference can be made to the description in the above embodiments, which will not be repeated here.

In summary, in the path switching method provided in this embodiment of the present disclosure, the target node will receive a request message sent by the source node, where the request message is used to request the target node to prepare for path switching, and then the target node will send a reply message to the source node. From this, it can be seen that embodiments of the present disclosure involve interactions between different nodes in the path switching process, and thus the disclosed method can be applied to the path switching process involving inter-gNB switching, so that the path switching process involving inter-gNB switching can be successfully executed.

Fig. 6 is a schematic flowchart of a path switching method provided in an embodiment of the present disclosure. The method is performed by a source node, and as shown in Fig. 6, the path switching method may include the following steps.

Step 601, a request message is sent to a target node, in which the request message is configured to request the target node to prepare for path switching, and/or receiving a reply message sent by the target node.

With respect to a detailed introduction to step 601, reference can be made to the description in the above embodiments, which will not be repeated here.

In summary, in the path switching method provided in this embodiment of the present disclosure, the source node will send a request message to the target node, where the request message is used to request the target node to prepare for path switching, and/or the source node will also receive a reply message sent by the target node. From this, it can be seen that embodiments of the present disclosure involve interactions between different nodes in the path switching process, and thus the disclosed method can be applied to the path switching process involving inter-gNB switching, so that the path switching process involving inter-gNB switching can be successfully executed.

Fig. 7 is a schematic flowchart of a path switching method provided in an embodiment of the present disclosure. The method is performed by a source node, and as shown in Fig. 7, the path switching method may include the following steps.

Step 701, a request message is sent to a target node, in which the request message is configured to request the target node to prepare for path switching.

With respect to a detailed introduction to step 701, reference can be made to the description in the above embodiments, which will not be repeated here.

In summary, in the path switching method provided in this embodiment of the present disclosure, the source node will send a request message to the target node, where the request message is used to request the target node to prepare for path switching. From this, it can be seen that embodiments of the present disclosure involve interactions between different nodes in the path switching process, and thus the disclosed method can be applied to the path switching process involving inter-gNB switching, so that the path switching process involving inter-gNB switching can be successfully executed.

Fig. 8 is a schematic flowchart of a path switching method provided in an embodiment of the present disclosure. The method is performed by a source node, and as shown in Fig. 8, the path switching method may include the following steps.

Step 801, a reply message sent by a target node is received.

With respect to a detailed introduction to step 801, reference can be made to the description in the above embodiments, which will not be repeated here.

In summary, in the path switching method provided in this embodiment of the present disclosure, the source node will receive a reply message sent by the target node. From this, it can be seen that embodiments of the present disclosure involve interactions between different nodes in the path switching process, and thus the disclosed method can be applied to the path switching process involving inter-gNB switching, so that the path switching process involving inter-gNB switching can be successfully executed.

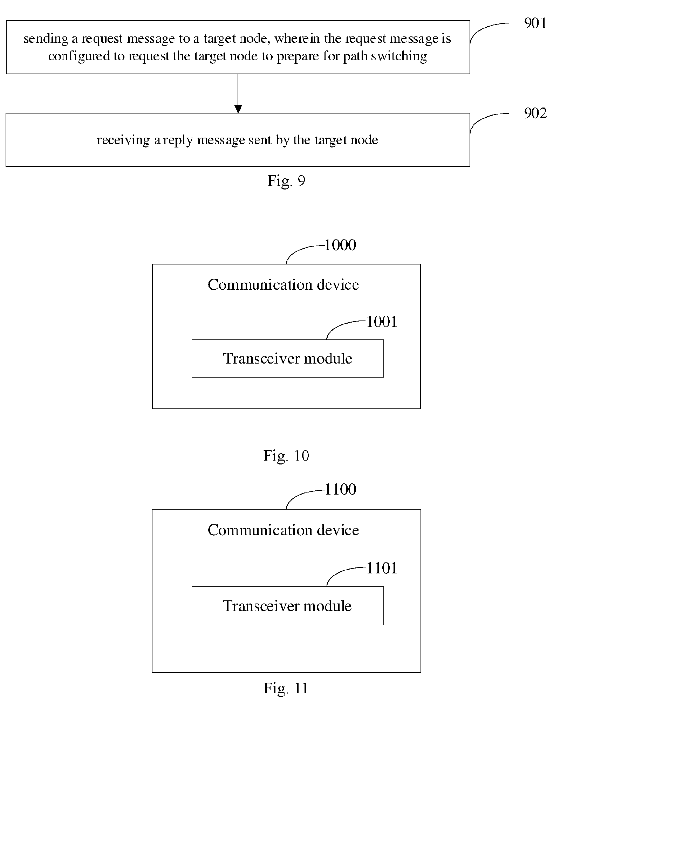

Fig. 9 is a schematic flowchart of a path switching method provided in an embodiment of the present disclosure. The method is performed by a source node, and as shown in Fig. 9, the path switching method may include the following steps.

Step 901, a request message is sent to a target node, in which the request message is configured to request the target node to prepare for path switching.

Step 902, a reply message sent by the target node is received.

With respect to a detailed introduction to steps 901-902, reference can be made to the description in the above embodiments, which will not be repeated here.

In summary, in the path switching method provided in this embodiment of the present disclosure, the source node will send a request message to the target node, where the request message is used to request the target node to prepare for path switching, and then the source node will receive a reply message sent by the target node. From this, it can be seen that embodiments of the present disclosure involve interactions between different nodes in the path switching process, and thus the disclosed method can be applied to the path switching process involving inter-gNB switching, so that the path switching process involving inter-gNB switching can be successfully executed.

The following is an example introduction of optional implementations for the methods in Figures 1-9 from the perspectives of the source node side and the target node side. Any of the following implementation s can be executed separately or in combination with other implementations.

### Source node side:

1. The source node sends a request message to the target node, requesting to prepare resources for path switching.
   1.1 For example, the request message may be a HANDOVER REQUEST.
2. Based on 1.1, the request message includes one or more of the following:
   2.1 indication information, configured to indicate direct link and/or indirect link
   2.2 identification of UE
   2.3 identification of target relay UE
   2.4 identification of target cell

For example, the UE identification (2.2/2.3) in 2 is UE identification on the source node and/or target node, for example UE XnAP ID.

For example, the cell identification (2.4) in 2 is Global ID (E-UTRA CGI or NR CGI).

For example, the relay UE may be U2N relay UE or U2U relay UE.

For example, the source node and the target node may be gNB.

3. Based on 2, the indication information used to indicate direct link and/or indirect link can be as follows.

3.1 For example, the indication information described in 2.1 can be one indication information, with different values indicating that the requested path switching is directly connected to the target node, indirectly connected to the target node (through relay connection), or not required (i.e., can be directly or indirectly connected).

3.2 For example, the indication information described in 2.1 can be multiple indication information, and different indication information can indicate whether the requested path switching is directly connected to the target node, indirectly connected to the target node, or not required (i.e., can be directly or indirectly connected).

3.3 For example, when the indication information does not exist, the default requested path switching is to directly connect to the target node, indirectly connect to the target node, or not required (i.e., both direct and indirect connections can be made).

4. Based on 2, the UE identification can be as follows.

4.1 For example, the UE identification may also be the identification of the remote UE. That is, it is possible to connect to the network device through the relay UE.

5. Based on 2, one or more target relay UE identification may be included.

5.1 For example, if one or more target relay UE identification is included, it implicitly indicates that the requested path switching is indirectly connected to the target node or not required.

5.2 For example, the target relay UE is the target relay node recommended by the source node for the requested indirect connection.

6. Based on 2, one ore more target cell identification may be included.

6.1 For example, if only 2.4 is included, but 2.3 is not included, it implicitly indicates that the requested path switching is directly connected to the target node or not required.

6.2 For example, for direct link, the target cell is that the UE described in 2.2 can switch to a direct connection with this target cell.

6.3 For example, for indirect link, the target cell is that the UE described in 2.2 can switch to an indirect connection with this target cell through a relay UE.

6.3.1 For example, the target cell is the serving cell or camping cell of the relay UE.

7. Based on 2, if both 2.3 and 2.4 are included in the request message, the target cell in 2.4 is either the serving cell of the relay UE (the relay UE is the UE in the connected state) or the camping cell of the relay UE (the relay UE is the UE in the idle or inactive state), or the possible serving cell of the relay UE (the relay UE is the UE in the connected state) or the possible camping cell of the relay UE (the relay UE is the UE in the idle or inactive state).

7.1 For example, one target relay UE may correspond to one or more target cell.

7.1.1 For example, one target relay UE and its corresponding one or more target cell may be included in one IE, which indicates the target of path switching.

7.2 For example, one target cell may correspond to one or more target relay UE.

7.2.1 For example, one target cell and its corresponding target relay UE may be included in one IE, which indicates the target of path switching.

7.3 For example, the correspondence between the target cell and the target relay UE can be indicated through the correspondence relationship IE.

As an example, one target relay UE may correspond to multiple target cells, which may be serving (resident) cells and/or potential serving (resident) cells for this relay UE. The potential serving (resident) cell refers to the cell that the relay UE can access (reside) in the future.

For example, one target relay UE may correspond to one target cell, which is the serving (resident) cell of the relay UE.

### Target node side:

8. The target node receives the request message sent by the source node, then it may perform one or more of the following steps:
8.1 preparing for path switching by the target node based on the request message
8.2 sending a reply message to the source node.

9. Based on 8.1, preparing for path switching by the target node based on the request message includes one or more of the following:
9.1 Determining the type of path switching prepared by the target node based on the request message (switch to direct link or indirect link)

For example, the types of path switching that can be prepared are determined based on the indication information and/or whether it includes 2.3 and 2.4. If both are possible, the target node determines the path switching type based on the implementation.

9.2 In case that indirect link can be prepared, it is necessary to determine the target relay UE and/or target cell.

9.2.1 For example, if the received request message from the source node contains one or more target relay UE identification, the target relay UE is determined from the one or more target relay UEs included in the request message. The target cell is determined from one or more target cells corresponding to the relay UE in the request message.

9.2.2 For example, if the received request message from the source node does not contain one or more target relay UE identification, and if it contains the target cell identification, the corresponding target relay UE will be selected based on the target cell. Otherwise, the target relay UE and corresponding target cell are determined based on the base station implementation.

9.3 In case that direct link can be prepared, it is necessary to determine the target cell.

9.3.1 For example, based on the target cell identification in the request message sent by the source node, the target cell can be determined.

9.4 In case that the target node cannot allocate resources for path switching or cannot determine the target relay UE and/or target cell, a failure message is sent; otherwise, an acknowledgement message is sent.

10. Based on 8.2, the target node sends the reply message to the source node, which is as follows.

10.1 The reply message may be an acknowledgement message (response message) informing the source node of the resources prepared by the target node for path switching or a failure message (rejection message).

10.1.1 For example, the response message (acknowledgement message) may be a HANDOVER REQUEST ACKNOWLEDGE message.

10.2 The reply message may be a failure message (rejection message) informing the source node that the path switching preparation has failed or the path switching is rejected.

10.2.1 As an example, the failure message (rejection message) may be a HANDOVER PREPARATION FAILURE message.

11. Based on 10, the acknowledgement message in 10.1 includes one or more of the following:
11.1 indication information, configured to indicate direct link or indirect link
11.2 identification of UE
11.3 identification of target relay UE
11.4 identification of target cell

For example, the UE identification (11.2/11.3) described in 11 is the UE identification on the source node and/or target node, such as UE XnAP ID.

As an example, the cell identification (11.4) described in 11 is a Global ID (E-UTRA CGI or NR CGI).

As an example, the relay UE may be a U2N relay UE or a U2U relay UE.

As an example, the source node and target node can be gNB.

12. Based on 11, the indication information is used to indicate the direct link or indirect link, indicating the final way for the UE to access this node as determined by the target node in 9.2:
12.1 For example, the indication information described in 11.1 can be one indication information, and different values can indicate whether the determined path switching is directly or indirectly connected to the target node.
12.2 For example, the indication information described in 11.1 can be multiple indication information, and different indication information can indicate whether the determined path switching is directly connected to the target node or indirectly connected to the target node, where only one of the multiple indication information can exist.
12.3 For example, when the indication information does not exist, the default requested path switching is to directly connect to the target node or indirectly connect to the target node.
12.4 For example, when the indication information does not exist, based on whether the acknowledgement message contains the target relay UE identification, the connection mode is determined. If yes, it is an indirect connection, otherwise it is a direct connection.

13. Based on 11, the UE identification may be as follows.

13.1 For example, the UE identification may also be the identification of the remote UE. That is, it is possible to connect to the network device through the relay UE.

14. Based on 11, one or more target relay UE identification may be included, which corresponds to the target relay UE selected in 9.

14.1 For example, if one or more target relay UE identification is included, it implicitly indicates that the determined path switching is an indirect connection.

15. Based on 11, one or more target cell identification may be included, which corresponds to the target cell selected in 9.

15.1 For example, if only 11.4 is included and 11.3 is not included, it implicitly indicates that the determined path switching is directly connected to the target node.

15.2 For example, for a direct link, the UE in 11.2 can switch to directly connect with this target cell.

15.3 For example, for an indirect link, the UE in 11.2 can switch to indirectly connect with the target cell through a relay UE.

15.3.1 For example, the target cell is the serving cell or camping cell of the relay UE.

16. Based on 11, if both 11.3 and 11.4 are included in the request message, the target cell in 11.4 is either the serving cell of the relay UE (the relay UE is the UE in the connected state) or the camping cell of the relay UE (the relay UE is the UE in the idle or inactive state), or the possible serving cell of the relay UE (the relay UE is the UE in the connected state) or the possible camping cell of the relay UE (the relay UE is the UE in the idle or inactive state).

16.1 For example, one target relay UE may correspond to one or more target cell.

16.1.1 For example, one target relay UE and its corresponding one or more target cell may be included in one IE, which indicates the target of path switching.

16.2 For example, one target cell may correspond to one or more target relay UE.

16.2.1 For example, one target cell and its corresponding target relay UE may be included in one IE, which indicates the target of path switching.

16.3 For example, the correspondence between the target cell and the target relay UE can be indicated through the correspondence relationship IE.

As an example, one target relay UE may correspond to multiple target cells, which may be serving (resident) cells and/or potential serving (resident) cells for this relay UE. The potential serving (resident) cell refers to the cell that the relay UE can access (reside) in the future.

For example, one target relay UE may correspond to one target cell, which is the serving (resident) cell of the relay UE.

17. Based on 10, the failure message in 10.2 includes one or more of the following information:
17.1 indication information, used to indicate direct link and/or indirect link
17.1.1 For example, the indication information indicates that the target node is preparing to switch to the direct link and/or indirect link but has failed
17.2 identification of UE
17.3 identification of target relay UE
17.3.1 For example, identification of the target relay UE that indicates connection or configuration failure in the request message.
17.4 identification of target cell
17.4.1 For example, identification of the target cell that indicates connection or configuration failure in the request message.

Fig. 10 is a block diagram of a communication device provided in an embodiment of the present disclosure. As shown in Fig. 10, the device may include:
a transceiver module, configured to receive a request message sent by a source node, in which the request message is configured to request the target node to prepare for path switching; and
the transceiver module is further configured to send a reply message to the source node.

**In** summary, in the communication device provided in embodiments of the present disclosure, the target node receives a request message sent by the source node, in which the request message is used to request the target node to prepare for path switching, and the target node also sends a reply message to the source node. From this, it can be seen that embodiments of the present disclosure involve interactions between different nodes in the path switching process, and thus the method of the present disclosure can be applied to the path switching process involving inter-gNB switching, so that the path switching process involving inter-gNB switching can be successfully executed.

Optionally, in an embodiment of the present disclosure, the reply message includes at least one of:
an acknowledgement message, in which the acknowledgement message indicates that a request from the source node is successful;
a failure message, in which the failure message indicates that the request from the source node has failed.

Optionally, in an embodiment of the present disclosure, the request message includes at least one of:
first indication information, configured to indicate a connection mode with the target node requested by the source node for a user equipment (UE) to be switched;
an identification of the UE to be switched;
identification(s) of one or more target relay UEs; or
identification(s) of one or more target cells.

Optionally, in an embodiment of the present disclosure, the device is further configured to:
configure resources for the path switching based on the request message.

Optionally, in an embodiment of the present disclosure, the transceiver module is further configured to:
send the reply message to the source node based on a resource allocation situation.

Optionally, in an embodiment of the present disclosure, the connection mode includes at least one of:
a direct connection; or
an indirect connection.

Optionally, in an embodiment of the present disclosure, the first indication information indicates that the source node requests a direct connection, an indirect connection, or any connection mode from the target node.

Optionally, in an embodiment of the present disclosure, the device is further configured to:
in response to the request message not including the first indication information, it is determined by default that the source node requests a first specific connection mode from the target node;
in which the first specific connection mode includes at least one of:
   a direct connection;
   an indirect connection; or
   any connection mode.

Optionally, in an embodiment of the present disclosure, in response to the request message including the identification of the target relay UE and the identification of the target cell; the target cell at least one of:
a serving cell of the target relay UE;
a camping cell of the target relay UE;
a possible serving cell of the target relay UE; or
a possible camping cell of the target relay UE.

Optionally, in an embodiment of the present disclosure, the identification of the target relay UE and the identification(s) of one or more target cells corresponding to the target relay UE are contained in the same information element (IE).

Optionally, in an embodiment of the present disclosure, the identification of the target cell and the identification(s) of one or more target relay UEs corresponding to the target cell are contained in the same IE.

Optionally, in an embodiment of the present disclosure, the device is further configured for at least one of:
determining connection modes requested by the source node, and determining a connection mode allowed by the target node from the connection modes requested by the source node, in which the connection mode allowed by the target node includes a direct connection or an indirect connection; and
in response to the connection mode allowed by the target node being the indirect connection, performing one or more of following operations:
configuring resources for path switching for one or more target relay UEs contained in the request message;
determining a target cell with successful resource configuration based on one or more target cells corresponding to a target relay UE with successful resource configuration;
configuring resources for path switching for one or more target cells contained in the request message;
determining the target relay UE with successful resource configuration based on one or more target relay UEs corresponding to the target cell with successful resource configuration;
autonomously determining one or more target relay UEs and configuring resources for path switching for the target relay UEs autonomously determined;
autonomously determining one or more target cells and configuring resources for path switching for the target cells autonomously determined; or
in response to the connection mode allowed by the target node being the direct connection, performing one or more of the following operations:
   configuring resources for path switching for one or more target cells contained in the request message; and
   autonomously determining one or more target cells and configuring resources for path switching for the target cells autonomously determined.

Optionally, in an embodiment of the present disclosure, the device is further configured for at least one of:
in response to the request message including first indication information, determining the connection mode requested by the source node based on the first indication information; or
in response to the request message not including the first indication information, determining the connection mode requested by the source node based on whether the request message includes the identification of the target relay UE and/or the identification of the target cell.

Optionally, in an embodiment of the present disclosure, the transceiver module is further configured for at least one of:
in response to failed resource allocation, sending a failure message to the source node; or
in response to successful resource allocation, sending an acknowledgement message to the source node.

Optionally, in an embodiment of the present disclosure, the acknowledgement message includes at least one of:
second indication information, configured to indicate a connection mode allowed by the target node;
an identification of UE to be switched;
an identification of a target relay UE with successful resource allocation; or
an identification of a target cell with successful resource allocation.

Optionally, in an embodiment of the present disclosure, the second indication information indicates that the connection mode allowed by the target node is a direct connection or an indirect connection.

Optionally, in an embodiment of the present disclosure, the device is further configured to:
in response to the acknowledgement message not including the second indication information, it is determined by default that the connection mode allowed by the target node is a second specific connection mode;
in which the second specific connection mode includes a direct connection or an indirect connection.

Optionally, in an embodiment of the present disclosure, in response to the acknowledgement message including the identification of the target relay UE and the identification of the target cell, the target cell includes at least one of:
a serving cell of the target relay UE;
a camping cell of the target relay UE;
a possible serving cell of the target relay UE; or
a possible camping cell of the target relay UE.

Optionally, in an embodiment of the present disclosure, the identification of the target relay UE and identification(s) of one or more target cells corresponding to the target relay UE are contained in the same IE.

Optionally, in an embodiment of the present disclosure, the identification of the target cell and identification(s) of one or more target relay UEs corresponding to the target cell are contained in the same IE.

Optionally, in an embodiment of the present disclosure, the failure message includes at least one of:
third indication information, configured to indicate a connection mode for failed switching of the target node;
an identification of UE to be switched;
an identification of a target relay UE with failed resource allocation; or
an identification of a target cell with failed resource allocation.

Fig. 11 is a block diagram of a communication device provided in an embodiment of the present disclosure. As shown in Fig. 11, the device may include:
a transceiver module, configured to send a request message to a target node, in which the request message is configured to request the target node to prepare for path switching;
the transceiver module is further configured to receive a reply message sent by the target node.

**In** summary, in the communication device provided by embodiments of the present disclosure, the source node sends a request message to the target node, in which the request message is used to request the target node to prepare for path switching, and the source node also receives a reply message sent by the target node. From this, it can be seen that embodiments of the present disclosure involve interactions between different nodes in the path switching process, and thus the method of the present disclosure can be applied to the path switching process involving inter-gNB switching, so that the path switching process involving inter-gNB switching can be successfully executed.

Optionally, in an embodiment of the present disclosure, the reply message includes at least one of:
an acknowledgement message, in which the acknowledgement message indicates that a request from the source node is successful; or
a failure message, in which the failure message indicates that the request from the source node has failed.

Optionally, in an embodiment of the present disclosure, the request message includes at least one of:
first indication information, configured to indicate a connection mode with the target node requested by the source node for a user equipment (UE) to be switched;
an identification of the UE to be switched;
identification(s) of one or more target relay UEs; or
identification(s) of one or more target cells.

Optionally, in an embodiment of the present disclosure, the connection mode includes at least one of:
a direct connection; or
an indirect connection.

Optionally, in an embodiment of the present disclosure, the first indication information indicates that the source node requests a direct connection, an indirect connection, or any connection mode from the target node.

Optionally, in an embodiment of the present disclosure, the device is further configured to:
in response to the request message not including the first indication information, it is determined by default that the source node requests a first specific connection mode from the target node;
in which the first specific connection mode includes at least one of:
   a direct connection; or
   an indirect connection;
   any connection mode.

Optionally, in an embodiment of the present disclosure, in response to the request message including the identification of the target relay UE and the identification of the target cell, the target cell includes at least one of:
a serving cell of the target relay UE;
a camping cell of the target relay UE;
a possible serving cell of the target relay UE; or
a possible camping cell of the target relay UE.

Optionally, in an embodiment of the present disclosure, the identification of the target relay UE and the identification(s) of one or more target cells corresponding to the target relay UE are contained in the same IE.

Optionally, in an embodiment of the present disclosure, the identification of the target cell and the identification(s) of one or more target relay UEs corresponding to the target cell are contained in the same IE.

Optionally, in an embodiment of the present disclosure, the acknowledgement message includes at least one of:
second indication information, configured to indicate a connection mode allowed by the target node;
an identification of UE to be switched;
an identification of a target relay UE with successful resource allocation; or
an identification of a target cell with successful resource allocation.

Optionally, in an embodiment of the present disclosure, the second indication information indicates that the connection mode allowed by the target node is a direct connection or an indirect connection.

Optionally, in an embodiment of the present disclosure, the device is further configured to:
in response to the acknowledgement message not including the second indication information, it is determined by default that the connection mode allowed by the target node is a second specific connection mode;
in which the second specific connection mode includes a direct connection or an indirect connection.

Optionally, in an embodiment of the present disclosure, in response to the acknowledgement message including the identification of the target relay UE and the identification of the target cell, the target cell includes at least one of:
a serving cell of the target relay UE;
a camping cell of the target relay UE;
a possible serving cell of the target relay UE; or
a possible camping cell of the target relay UE.

Optionally, in an embodiment of the present disclosure, the identification of the target relay UE and identification(s) of one or more target cells corresponding to the target relay UE are contained in the same IE.

Optionally, in an embodiment of the present disclosure, the identification of the target cell and identification(s) of one or more target relay UEs corresponding to the target cell are contained in the same IE.

Optionally, in an embodiment of the present disclosure, the failure message includes at least one of:
third indication information, configured to indicate a connection mode for failed switching of the target node;
an identification of UE to be switched;
an identification of a target relay UE with failed resource allocation; or
an identification of a target cell with failed resource allocation.

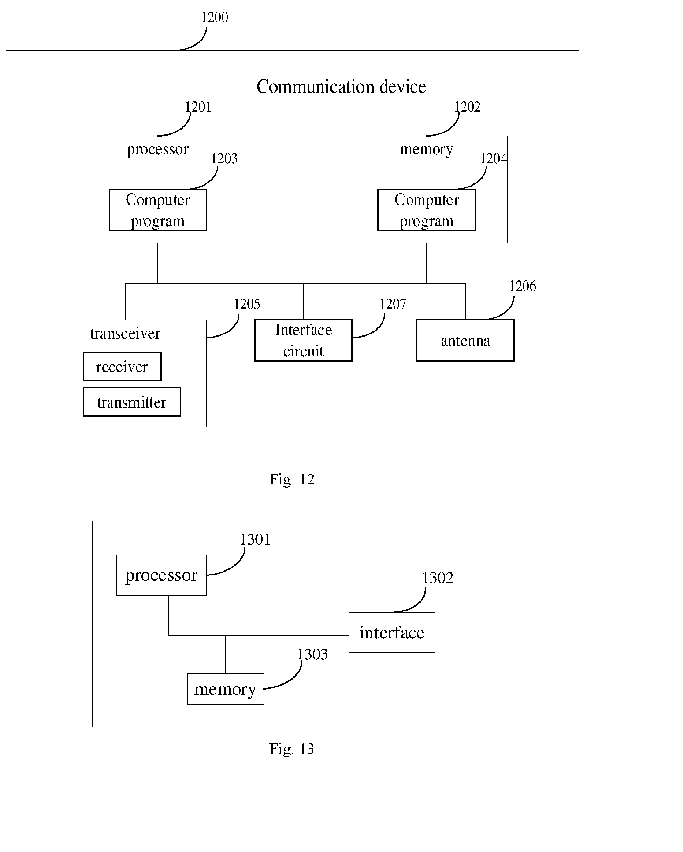

Please refer to Fig. 12, which is a block diagram of a communication device 1200 provided in an embodiment of the present disclosure. The communication device 1200 may be a network device, or may be a terminal device, or may be a chip, a chip system, or a processor that supports the network device to implement the above methods, or may be a chip, a chip system, or a processor that supports the terminal device to implement the above methods. This device can be used to implement the methods described in the above method embodiments, which can be referred to in the description of the above method embodiments.

The communication device 1200 may include one or more processors 1201. The processor 1201 may be a general-purpose processor or a dedicated processor, etc. For example, it may be a baseband processor or a central processing unit. The baseband processor can be used to process communication protocols and communication data, while the central processor can be used to control communication devices (such as base stations, baseband chips, terminal devices, terminal device chips, DU or CU, etc.), execute computer programs, and process data from computer programs.

Optionally, the communication device 1200 may also include one or more memories 1202, on which computer programs 1204 may be stored. The processor 1201 executes the computer programs 1204 to enable the communication device 1200 to perform the methods described in the above method embodiments. Optionally, the memory 1202 may also store data. The communication device 1200 and the memory 1202 can be set separately or integrated together.

Optionally, the communication device 1200 may also include a transceiver 1205 and an antenna 1206. The transceiver 1205 can be referred to as a transceiver unit, transceiver machine, or transceiver circuit, etc., used to achieve transceiver functions. The transceiver 1205 can include a receiver and a transmitter, where the receiver can be referred to as a receiver unit or receiving circuit, etc., used to achieve the receiving function; the transmitter can be referred to as a transmitter unit or a transmission circuit, etc., used to implement the transmission function.

Optionally, the communication device 1200 may also include one or more interface circuits 1207. The interface circuit 1207 is used to receive code instructions and transmit them to the processor 1201. The processor 1201 executes the code instructions to cause the communication device 1200 to perform the method described in the above method embodiments.

In one implementation, the processor 1201 may include a transceiver for implementing receiving and transmitting functions. For example, the transceiver can be a transceiver circuit, or an interface, or an interface circuit. The transceiver circuit, interface, or interface circuit used to implement the receiving and sending functions can be separate or integrated together. The above-mentioned transceiver circuit, interface or interface circuit can be used for reading and writing code/data, or the above-mentioned transceiver circuit, interface or interface circuit can be used for signal transmission or transfer.

In one implementation, the processor 1201 may store a computer program 1203 that runs on the processor 1201 and enables the communication device 1200 to perform the method described in the above method embodiments. The computer program 1203 may be fixed in the processor 1201, in which case the processor 1201 may be implemented by hardware.

In one implementation, the communication device 1200 may include a circuit that can perform the functions of sending, receiving, or communicating as described in the aforementioned method embodiments. The processor and transceiver described in this disclosure can be implemented on integrated circuits (ICs), analog ICs, radio frequency integrated circuits (RFICs), mixed signal ICs, application specific integrated circuits (ASICs), printed circuit boards (PCBs), electronic devices, etc. The processor and transceiver can also be manufactured using various IC process technologies, such as complementary metal oxide semiconductor (CMOS), n-type metal oxide semiconductor (NMOS), positive channel metal oxide semiconductor (PMOS), bipolar junction transistor (BJT), bipolar CMOS, silicon germanium (SiGe), gallium arsenide (GaAs), etc.

The communication device described in the above embodiments may be a network device or a terminal device, but the scope of the communication device described in this disclosure is not limited to this, and the structure of the communication device may not be limited by Fig. 12. The communication device may be a standalone device or a part of a larger device. For example, the communication device may be:
(1) Independent integrated circuit IC, or chip, or chip system or subsystem;
(2) A set of one or more ICs, optionally including storage components for storing data and computer programs;
(3) ASIC, such as modems;
(4) Modules that can be embedded in other devices;
(5) Receiver, terminal device, intelligent terminal device, cellular phone, wireless device, handheld device, mobile unit, vehicle mounted device, network device, cloud device, artificial intelligence device, etc.;
(6) Others and so on.

For the communication device that can be a chip or chip system, reference can be made to the schematic diagram of the structure of the chip shown in Fig. 13. The chip shown in Fig. 13 includes processors 1301 and interfaces 1302. The number of processors 1301 can be one or more, and the number of interfaces 1302 can be multiple.

Optionally, the chip also includes a memory 1303 for storing necessary computer programs and data.

Technicians in this field can also understand that various illustrative logical blocks and steps listed in the embodiments of the present disclosure can be implemented by electronic hardware, computer software, or a combination of both. Whether such functionality is implemented by hardware or software depends on the specific application and the design requirements of the entire system. Technicians in this field can use various methods to implement the described functions for each specific application, but such implementation should not be understood as exceeding the scope of protection of the disclosed embodiments.

The present disclosure also provides a readable storage medium storing instructions that, when executed by a computer, implement the functions of any of the method embodiments described above.

The present disclosure also provides a computer program product that, when executed by a computer, implements the functions of any of the method embodiments described above.

In the above embodiments, it can be fully or partially implemented by software, hardware, firmware, or any combination thereof. When implemented using software, it can be fully or partially implemented in the form of a computer program product. The computer program product includes one or more computer programs. When loading and executing the computer program on a computer, all or part of the process or function described in embodiments of the present disclosure is generated. The computer may be a general-purpose computer, a specialized computer, a computer network, or other programmable device. The computer program can be stored in a computer-readable storage medium or transmitted from one computer-readable storage medium to another. For example, the computer program can be transmitted from a website site, computer, server, or data center to another website site, computer, server, or data center via wired (such as coaxial cable, fiber optic, digital subscriber line (DSL)) or wireless (such as infrared, wireless, microwave, etc.) means. The computer-readable storage medium can be any available medium that a computer can access, or a data storage device such as a server or data center that integrates one or more available media. The available media can be magnetic media (such as floppy disks, hard disks, magnetic tapes), optical media (such as high-density digital video discs (DVDs)), or semiconductor media (such as solid state disks (SSDs)).

Those skilled in the art can understand that the first, second, and other numerical numbers mentioned in this disclosure are only for the convenience of description and are not intended to limit the scope of the disclosed embodiments, but also indicate the order of occurrence.

"At least one" in the present disclosure can also be described as one or more, and "multiple" \can be two, three, four, or more, without limitation in this disclosure. In embodiments of the present disclosure, for a type of technical feature, the technical features in the type of technical feature are distinguished by "first", "second", "third", "A", "B", "C", and "D", etc. The technical features described by "first", "second", "third", "A", "B", "C", and "D" have no order of priority or size.

The correspondence relationships shown in each table in this disclosure can be configured or predefined. The values of the information in each table are only examples and can be configured as other values, which are not limited by this disclosure. When configuring the correspondence between information and various parameters, it is not necessarily required to configure all the correspondence relationships shown in each table. For example, in the table disclosed herein, the correspondence relationships shown in certain rows may not be configured. For another example, appropriate deformation adjustments can be made based on the above table, such as splitting, merging, and so on. The titles in the above tables indicate that the names of the parameters can also be other names that the communication device can understand, and the values or representations of the parameters can also be other values or representations that the communication device can understand. The above tables can also be implemented using other data structures, such as arrays, queues, containers, stacks, linear tables, pointers, linked lists, trees, graphs, structures, classes, heaps, hash tables, etc.

The predefined in this disclosure can be understood as defined, defined in adventure, stored, prestored, pre-negotiated, pre-configured, solidified, or pre-fired.

Those skilled in the art will recognize that the units and algorithm steps described in the embodiments of the present disclosure can be implemented using electronic hardware, or a combination of computer software and electronic hardware. Whether these functions are executed in hardware or software depends on the specific application and design constraints of the technical solution. Professional technicians can use different methods to achieve the described functionality for each specific application, but such implementation should not be considered beyond the scope of this disclosure.

Technicians in the relevant field can clearly understand that, for the convenience and conciseness of description, the specific working process of the system, device, and unit described above can refer to the corresponding process in the aforementioned method embodiments, which will not be repeated here.

The above is only a specific implementation of the present disclosure, but the scope of protection of the present disclosure is not limited to this. Any skilled person familiar with the technical field can easily think of changes or replacements within the technical scope disclosed in the present disclosure, which should be included in the scope of protection of the present disclosure. Therefore, the scope of protection of this disclosure should be based on the scope of protection of the claims.

## Claims

1. A path switching method, performed by a target node, comprising:
receiving a request message sent by a source node, wherein the request message is configured to request the target node to prepare for path switching; and
sending a reply message to the source node.

2. The method of claim 1, wherein the reply message comprises at least one of:
an acknowledgement message, wherein the acknowledgement message indicates that a request from the source node is successful; or
a failure message, wherein the failure message indicates that the request from the source node has failed.

3. The method of claim 1, wherein the request message comprises at least one of:
first indication information, configured to indicate a connection mode with the target node requested by the source node for a user equipment (UE) to be switched;
an identification of the UE to be switched;
identification(s) of one or more target relay UEs; or
identification(s) of one or more target cells.

4. The method of claim 1, further comprising:
configuring resources for the path switching based on the request message.

5. The method of claim 4, wherein sending the reply message to the source node comprises:
sending the reply message to the source node based on a resource allocation situation.

6. The method of claim 3, wherein the connection mode comprises at least one of:
a direct connection; or
an indirect connection.

7. The method of claim 3, wherein the first indication information indicates that the source node requests a direct connection, an indirect connection, or any connection mode from the target node.

8. The method of claim 1, wherein in response to the request message not comprising the first indication information, it is determined by default that the source node requests a first specific connection mode from the target node;
wherein the first specific connection mode comprises at least one of:
a direct connection;
an indirect connection; or
any connection mode.

9. The method of claim 3, wherein in response to the request message comprising the identification of the target relay UE and the identification of the target cell, the target cell at least one of:
a serving cell of the target relay UE;
a camping cell of the target relay UE;
a possible serving cell of the target relay UE; or
a possible camping cell of the target relay UE.

10. **The** method of claim 9, wherein the identification of the target relay UE and the identification(s) of one or more target cells corresponding to the target relay UE are contained in the same information element (IE).

11. **The** method of claim 9, wherein the identification of the target cell and the identification(s) of one or more target relay UEs corresponding to the target cell are contained in the same IE.

12. The method of claim 4, wherein configuring the resources for the path switching based on the request message comprises at least one of:
determining connection modes requested by the source node, and determining a connection mode allowed by the target node from the connection modes requested by the source node, wherein the connection mode allowed by the target node comprises a direct connection or an indirect connection; and
in response to the connection mode allowed by the target node being the indirect connection, performing one or more of following operations:
configuring resources for path switching for one or more target relay UEs contained in the request message;
determining a target cell with successful resource configuration based on one or more target cells corresponding to a target relay UE with successful resource configuration;
configuring resources for path switching for one or more target cells contained in the request message;
determining the target relay UE with successful resource configuration based on one or more target relay UEs corresponding to the target cell with successful resource configuration;
autonomously determining one or more target relay UEs and configuring resources for path switching for the target relay UEs autonomously determined; and
autonomously determining one or more target cells and configuring resources for path switching for the target cells autonomously determined; or
in response to the connection mode allowed by the target node being the direct connection, performing one or more of the following operations:
configuring resources for path switching for one or more target cells contained in the request message; and
autonomously determining one or more target cells and configuring resources for path switching for the target cells autonomously determined.

13. The method of claim 12, wherein determining the connection mode requested by the source node comprises at least one of:
in response to the request message comprising first indication information, determining the connection mode requested by the source node based on the first indication information; or
in response to the request message not comprising the first indication information, determining the connection mode requested by the source node based on whether the request message comprises the identification of the target relay UE and/or the identification of the target cell.

14. The method of claim 12, wherein sending the reply message to the source node based on the resource allocation situation comprises at least one of:
in response to failed resource allocation, sending a failure message to the source node; or
in response to successful resource allocation, sending an acknowledgement message to the source node.

15. The method of claim 2, wherein the acknowledgement message comprises at least one of:
second indication information, configured to indicate a connection mode allowed by the target node;
an identification of UE to be switched;
an identification of a target relay UE with successful resource allocation; or
an identification of a target cell with successful resource allocation.

16. **The** method of claim 15, wherein the second indication information indicates that the connection mode allowed by the target node is a direct connection or an indirect connection.

17. The method of claim 15, wherein in response to the acknowledgement message not comprising the second indication information, it is determined by default that the connection mode allowed by the target node is a second specific connection mode;
wherein the second specific connection mode comprises a direct connection or an indirect connection.

18. The method of claim 15, wherein in response to the acknowledgement message comprising the identification of the target relay UE and the identification of the target cell, the target cell comprises at least one of:
a serving cell of the target relay UE;
a camping cell of the target relay UE;
a possible serving cell of the target relay UE; or
a possible camping cell of the target relay UE.

19. The method of claim 18, wherein the identification of the target relay UE and identification(s) of one or more target cells corresponding to the target relay UE are contained in the same IE.

20. The method of claim 18, wherein the identification of the target cell and identification(s) of one or more target relay UEs corresponding to the target cell are contained in the same IE.

21. The method of claim 2, wherein the failure message comprises at least one of:
third indication information, configured to indicate a connection mode for failed switching of the target node;
an identification of UE to be switched;
an identification of a target relay UE with failed resource allocation; or
an identification of a target cell with failed resource allocation.

22. A path switching method, performed by a source node, comprising:
sending a request message to a target node, wherein the request message is configured to request the target node to prepare for path switching; and
receiving a reply message sent by the target node.

23. The method of claim 22, wherein the reply message comprises at least one of:
an acknowledgement message, wherein the acknowledgement message indicates that a request from the source node is successful; or
a failure message, wherein the failure message indicates that the request from the source node has failed.

24. The method of claim 22, wherein the request message comprises at least one of:
first indication information, configured to indicate a connection mode with the target node requested by the source node for a user equipment (UE) to be switched;
an identification of the UE to be switched;
identification(s) of one or more target relay UEs; or
identification(s) of one or more target cells.

25. The method of claim 24, wherein the connection mode comprises at least one of:
a direct connection; or
an indirect connection.

26. The method of claim 24, wherein the first indication information indicates that the source node requests a direct connection, an indirect connection, or any connection mode from the target node.

27. The method of claim 22, wherein in response to the request message not comprising the first indication information, it is determined by default that the source node requests a first specific connection mode from the target node;
wherein the first specific connection mode comprises at least one of:
a direct connection; or
an indirect connection;
any connection mode.

28. The method of claim 24, wherein in response to the request message comprising the identification of the target relay UE and the identification of the target cell, the target cell comprises at least one of:
a serving cell of the target relay UE;
a camping cell of the target relay UE;
a possible serving cell of the target relay UE; or
a possible camping cell of the target relay UE.

29. The method of claim 28, wherein the identification of the target relay UE and the identification(s) of one or more target cells corresponding to the target relay UE are contained in the same information element (IE).

30. The method of claim 28, wherein the identification of the target cell and the identification(s) of one or more target relay UEs corresponding to the target cell are contained in the same IE.

31. The method of claim 23, wherein the acknowledgement message comprises at least one of:
second indication information, configured to indicate a connection mode allowed by the target node;
an identification of UE to be switched;
an identification of a target relay UE with successful resource allocation; or
an identification of a target cell with successful resource allocation.

32. The method of claim 31, wherein the second indication information indicates that the connection mode allowed by the target node is a direct connection or an indirect connection.

33. The method of claim 31, wherein in response to the acknowledgement message not comprising the second indication information, it is determined by default that the connection mode allowed by the target node is a second specific connection mode;
wherein the second specific connection mode comprises a direct connection or an indirect connection.

34. The method of claim 31, wherein in response to the acknowledgement message comprising the identification of the target relay UE and the identification of the target cell, the target cell comprises at least one of:
a serving cell of the target relay UE;
a camping cell of the target relay UE;
a possible serving cell of the target relay UE; or
a possible camping cell of the target relay UE.

35. The method of claim 34, wherein the identification of the target relay UE and identification(s) of one or more target cells corresponding to the target relay UE are contained in the same IE.

36. The method of claim 34, wherein the identification of the target cell and identification(s) of one or more target relay UEs corresponding to the target cell are contained in the same IE.

37. The method of claim 23, wherein the failure message comprises at least one of:
third indication information, configured to indicate a connection mode for failed switching of the target node;
an identification of UE to be switched;
an identification of a target relay UE with failed resource allocation; or
an identification of a target cell with failed resource allocation.

38. A communication device, configured in a terminal device, comprising:
a transceiver module, configured to receive a request message sent by a source node, wherein the request message is configured to request the target node to prepare for path switching;
the transceiver module is configured to send a reply message to the source node.

39. A communication device, configured in a network device, comprising:
a transceiver module, configured to send a request message to a target node, wherein the request message is configured to request the target node to prepare for path switching;
the transceiver module is configured to receive a reply message sent by the target node.

40. A communication device, comprising a processor and a memory, wherein the memory stores a computer program, the processor is configured to execute the computer program stored in the memory to cause the device to perform the method according to any one of claims 1 to 21, or the processor is configured to execute the computer program stored in the memory to cause the device to perform the method according to any one of claims 22 to 37.

41. A communication device, comprising a processor and an interface circuit, wherein
the interface circuit is configured to receive code instructions and transmit the code instructions to the processor;
the processor is configured to run the code instructions to execute the method according to any one of claims 1 to 21, or to run the code instructions to execute the method according to any one of claims 22 to 37.

42. A computer readable storage medium, storing computer executable instructions which, when executed by a processor, cause the method of any of claims 1-21 to be implemented, or the method of any of claims 22-37 to be implemented.
